# EUROPEAN PATENT APPLICATION

(11) **EP 2 769 793 A1**
(43) Date of publication of application: **27.08.2014**
(21) Application number: 12841754.0
(22) Date of filing: 13.08.2012
(51) Int. Cl.: B23D 45/10

(54) **ROTARY BEVELMENT COMPOSITE SAW BLADE**

(30) Priority: 17.10.2011 CN 201110312981; 17.10.2011 CN 201120393062 U; 04.11.2011 CN 201110372656; 04.11.2011 CN 201120453133 U; 06.04.2012 CN 201210100204; 06.04.2012 CN 201220143863 U
(71) Applicant: Suzhou Tingens Iisaw Technology Co. Ltd, Jiangsu 215021 (CN)
(72) Inventor: WEN, Qingpu, Suzhou Jiangsu 215021 (CN)
(74) Representative: Gulde & Partner
(86) International application number: PCT/CN2012/079994
(87) International publication number: WO 2013/056591

(57) **Abstract**

A rotary bevelment composite saw blade comprises an outside saw blade (11) and an inside saw blade (21). The outside saw blade (11) and the inside saw blade (21) rotate around a coaxial center of rotation, the outside saw blade and the inside saw blade rotate in opposite directions, and the outside saw blade and the inside saw blade are arranged in parallel. A bearing (5) is arranged between the outside saw blade (11) and the inside saw blade (21). An inner race of the bearing (5) positions the outside saw blade (11), and an outer race of the bearing (5) positions the inside saw blade (21). The outside saw blade (11) and the inside saw blade (21) freely rotate along with the inner race and the outer race of the bearing (5), respectively. Friction, interference, and collision are not generated between saw blades of the rotary bevelment composite saw blade, and the rotary bevelment composite saw blade is efficient, stable, and reliable in a cutting process, and is suitable to cut materials such as metal, stone, wood, and glass.

## Description

### TECHNICAL FIELD

The present disclosure belongs to the field of a rotary saw cutting device, and relates to a design solution of a rotary bevelment composite saw blade and a rotary bevelment composite saw blade to implement the design solution. The rotary bevelment composite saw blade is suitable for a rotary bevelment electric circular saw, an oblique saw, and a gasoline power cutting saw. The rotary bevelment composite saw blade is provided to cut material profile and slab, such as metal, stone, wood, plastic, and various materials used in rescue and relief.

### BACKGROUND

A rotary bevelment saw is also called a double saw blade cutting machine, which simultaneously drives an outside saw blade and an inside saw blade through driving of a coaxial output shaft of a transmission device. One of the two saw blades rotates in a clockwise direction, and another saw blade rotates in a counterclockwise direction, which causes rotary cutting to cut in opposite directions. Because the outside saw blade and the inside saw blade rotate in opposite directions, the outside saw blade and the inside saw blade balance each other when cutting, and stably and quickly cut a workpiece under a reacting force of the workpiece.

The inside saw blade and the outside saw blade are separately arranged and installed in a typical rotary bevelment saw blade manufactured at home and abroad, where the outside saw blade and the inside saw blade collide and rub with each other after the outside saw blade and the inside saw blade are installed. The outside saw blade is fixed to an output end of a driving shaft of the outside saw blade through a pressure plate screw, and the inside saw blade is positioned in axis direction through arrangement of a wear resistant ring or a wear resistant lug boss at a frictional surface between the inside saw blade and the outside saw blade. The wear resistant ring or the wear resistant lug boss bear a hold-down force of a same pressure plate screw as the outside saw blade, and presses on a flange surface of an output end of a driving shaft of the inside saw blade. Furthermore, the wear resistant ring or the wear resistant lug boss drives a mounting hole arranged on the inside saw blade to further drive the inside saw blade to rotate through a driving lug boss arranged on the flange surface of the output end of the driving shaft of the inside saw blade. Thus, the wear resistant ring or the wear resistant lug boss not only fixes the outside saw blade and the inside saw blade, but also rubs and rotates between the outside saw blade and the inside saw blade. The above-mentioned design deviates from a principle that two surfaces in a same direction are avoided, while simultaneously obtaining a reliable coordination in mechanical design.

Thus, the inside saw blade is not reliably positioned. The wear resistant ring or the wear resistant lug boss is worn as the outside saw blade and the inside saw blade rotate in an opposite direction, which allows the position of the inside saw blade to worsen, and makes the inside saw blade loose. Thus, the inside saw blade and the outside saw blade are not reliably positioned and compacted because of manufacture deviations. When the inside saw blade and the outside saw blade rotate in opposite direction, the inside saw blade and the outside saw blade inevitably wiggle and jump in a rotation because of unreliable position and fixing of the inside saw blade. A working clearance between the inside saw blade and the outside saw blade is not ensured, which results in generation of heat between the inside saw blade and the outside saw blade because of friction, and causes interference and collision between the inside saw blade and the outside saw blade. The workpiece is even accumulated and blocked between the inside saw blade and the outside saw blade, which splits the inside saw blade and the outside saw blade, thus, the saw blades cannot cut, the machine is damaged, and even resulting in personal injury.

### SUMMARY

In view of the above-described problems, the aim of the present disclosure is to provide a rotary bevelment composite saw blade having an outside saw blade and an inside saw blade capable of reliable position, close fit, no friction, free rotation, low cutting power consumption, long service life, convenient assembly, and stable rotary bevelment.

The aim of the present disclosure is achieved by the following methods.

A design solution of a rotary bevelment composite saw blade comprises an outside saw blade and an inside saw blade. The outside saw blade and the inside saw blade rotate round a coaxial center of rotation, and are arranged face to face. Centers of the outside saw blade and the inside saw blade are configured with a mounting hole. The outside saw blade and the inside saw blade rotate in opposite directions.

A bearing and a thrust ring are arranged between the outside saw blade and the inside saw blade, and the outside saw blade and the inside saw blade are integrally positioned through the bearing. An inner race of the bearing is in positional connection with the outside saw blade, and an outer race of the bearing is in positional connection with the inside saw blade. The thrust ring controls a working clearance between the outside saw blade and the inside saw blade, which achieves a rotary connection of the outside saw blade and the inside saw blade.

The outside saw blade and a supporting sleeve are in concentric engagement, and the outside saw blade is connected and fixed to the supporting sleeve through fastening parts. The inner race of the bearing is connected to the supporting sleeve in concentric engagement, and limits position of the outside saw blade. The inner saw blade and a flange sleeve are in concentric engagement, and are connected and fixed by the fastening parts. The flange sleeve is connected to the outer race in concentric engagement, and the inner saw blade is connected and fixed to the flange sleeve by the fastening parts. The outer race of the bearing is connected to the flange sleeve in concentric engagement, and positions the inside saw blade. The thrust ring is arranged between the outside saw blade and the inner race, and the working clearance between the outside saw blade and the inside saw blade is determined by through the thrust ring.

The outside saw blade and the inside saw blade are in position and fit connection with the bearing to form an integrate rotary bevelment composite saw blade, and the outside saw blade and the inside saw blade freely rotate along with the inner race of the bearing and the outer race of the bearing respectively. A driving keyway is arranged in a center of the supporting sleeve, which allows the supporting sleeve to be in driving coupling connection with a driving shaft of the outside saw blade. A driving coupling interface is arranged in an end surface of the flange sleeve, which allows the flange sleeve to be in driving coupling connection with a driving shaft of the inside saw blade, the driving shaft of the inside saw blade and the driving shaft of the outside saw blade are concentrically arranged, and rotate in the opposite directions.

The rotary bevelment composite saw blade to implement the above-described design solution comprises an outside saw blade assembly, an inside saw blade assembly, and a thrust ring. The outside saw blade assembly comprises the outside saw blade, a supporting sleeve, and fastening parts. The inside saw blade assembly comprises the inside saw blade, a flange sleeve, the fastening parts, and a bearing. The outside saw blade comprises an outside saw blade body and welding saw teeth, and the inside saw blade comprises an outside saw blade body and the welding saw teeth. The welding saw teeth of the outside saw blade and the welding saw teeth of the inside saw blade are evenly welded in a tooth holder of a periphery of the outside saw blade body and a tooth holder of a periphery of the inside saw blade body, respectively. A first side face of the outside saw blade body is regarded as a working surface A1, and a second side face of the outside saw blade body is regarded as a cutting face A2. A first side face of the inside saw blade body is regarded as a working surface B1, and a second side face of the inside saw blade body is regarded as a cutting face B2. The outside saw blade and the inside saw blade rotate round the coaxial center of rotation, and centers of the outside saw blade and the inside saw blade are configured with mounting holes. The working surface of the outside saw blade body and the working surface of the inside saw blade body are arranged face to face, and are parallel with each other, and a working clearance is preset between the working surface of the outside saw blade body and the working surface of the inside saw blade body. The outside saw blade and the inside saw blade rotate in the opposite directions.

A cylindrical surface and an axial locating surface being perpendicular to the cylindrical surface are arranged on the supporting sleeve. The mounting hole of the outside saw blade and the cylindrical surface of the supporting sleeve are in concentric engagement, and the cutting face A2 of the outside saw blade parallelly attaches to the axial locating surface of the supporting sleeve, the outside saw blade body is connected and fixed to the axial locating surface of the supporting sleeve through the fastening parts. The inner race of the bearing is connected to the cylindrical surface of the supporting sleeve in concentric engagement, and positions the outside saw blade. A center of the flange sleeve is configured with a mounting hole and an axial locating surface, a flange surface is a side surface of the flange sleeve that is in a same direction with the axial locating surface of the flange sleeve, and the bearing is fitted in the mounting hole of the flange sleeve. The mounting hole of the inside saw blade is concentric with the flange sleeve, and the cutting face B2 of the inside saw blade parallelly attaches to the flange surface, the inside saw blade body is connected and fixed to the flange surface through the fastening parts. A first side surface of the outer race of the bearing parallelly attaches to the axial locating surface of the flange sleeve, a second side surface of the outer race of the bearing parallelly attaches to the cutting face of the inside saw blade, and the outer race of the bearing positions the inside saw blade. The thrust ring is arranged between the inner race of the bearing and the outside saw blade, a first side surface of the thrust ring parallelly attaches to the working surface of the outside saw blade, and a second side surface of the thrust ring parallelly attaches to a side surface of the inner race of the bearing being adjacent to the second side surface of the thrust ring. The outside saw blade is positioned by the inner race of the bearing and the inside saw blade is positioned by the outer race of the bearing to form the integrate rotary bevelment composite saw blade, and the outside saw blade and the inside saw blade rotate along with the inner race and the outer race of the bearing, respectively.

Furthermore, the welding saw teeth of the outside saw blade are even with or lower than the working surface A1 of the outside saw blade, which avoids the welding saw teeth of the outside saw blade from protruding from the working surface A1 of the outside saw blade. The welding saw teeth of the outside saw blade protrude from the cutting face of the outside saw blade to form side cutting edges. The welding saw teeth of the inside saw blade are even with or lower than the working surface B1 of the inside saw blade, which avoids the welding saw teeth of the inside saw blade from protruding from the working surface B1 of the inside saw blade. The welding saw teeth of the inside saw blade protrude from the cutting face B2 of the inside saw blade to form the side cutting edges.

Distance between the welding saw teeth and the working surface of the saw blade is in the range of 0-0.2 mm, and heights of the side cutting edges of the outside saw blade and the inside saw blade are in the range of 0-1mm, which ensures that the interference and collision between the welding saw teeth of the outside saw blade and the welding saw teeth of the inside saw blade to not be generated, and the side cutting edges can be formed the cutting faces of the outside and inside saw blade.

Furthermore, the first side surface of the thrust ring closely attaches to the outside saw blade, and the second side surface of the thrust ring closely attaches to the inner race of the bearing. The working clearance between the outside saw blade and the inside saw blade is determined by a width of the thrust ring and a thickness of the inside saw blade body, and is set between 0 mm and 0.5 mm, which ensures a reliable rotary position of the outside saw blade and the inside saw blade, and the working clearance between the outside saw blade and the inside saw blade is accurately ensured.

Furthermore, diameter of the mounting hole of the inside saw blade is less than an external diameter of the bearing, thus a position step is formed after the inside saw blade is fixed to the flange sleeve, which allows the inside saw blade body to limit the position of the outer race of the bearing in axial direction. Thus, the inside saw blade does not move along axially in the cutting process, which is good for stabilizing the working clearance between the outside saw blade and the inside blade. At least three countersunk holes are arranged in a side of the working surface A1 of the outside saw blade around the mounting hole, and in circular distribution around axis of rotation. At least three countersunk holes are arranged in a side of the working surface B1 of the inside saw blade around the mounting hole, and in circular distribution around axis of rotation. Thus, the outside saw blade is fixedly connected to the supporting sleeve, and the inside saw blade is fixedly connected to the flange sleeve.

Furthermore, at least three connecting holes are arranged in the axial locating surface of the supporting sleeve, and in circular distribution around axis of rotation. Position and distribution of the connecting holes are consistent with position and distribution of the countersunk holes of the outside saw blade body, and a driving keyway is arranged in an inner hole of the supporting sleeve. Thus, the mounting hole of the outside saw blade and the cylindrical surface of the supporting sleeve are in concentric engagement, and the cutting face A2 of the outside saw blade parallelly attaches to the axial locating surface of the supporting sleeve. The fastening parts pass through the countersunk hole of the outside saw blade to connect and fix the outside saw blade body to the axial locating surface of the supporting sleeve. The cylindrical surface of the supporting sleeve is connected with the inner race of the bearing in concentric engagement, and the inner race of the bearing positions the outside saw blade, which forms the outside saw blade assembly, and allows the outside saw blade and the supporting sleeve to rotate along with the inner race of the bearing. The driving keyway is arranged in the inner hole of the supporting sleeve, which allows the supporting sleeve and a driving shaft of the outside saw blade to form a driving coupling connection between the supporting sleeve and a driving shaft of the outside saw blade, and further drives the supporting sleeve to rotate. The driving keyway may be a spline, a parallel key, a woodruff key, or a flat-square hole having at least one plane.

Furthermore, at least three connecting holes are arranged in the flange surface of the flange sleeve, and in circular distribution around axis of rotation. Position and distribution of the connecting holes are consistent with position and distribution of the countersunk holes of the inside saw blade body. Thus, the fastening parts pass through the countersunk hole of the inside saw blade to connect and fix the inside saw blade to the flange sleeve. The bearing is fitted in the mounting hole of the flange sleeve, and is concentric engagement with the flange sleeve. The outer race of the bearing positions the inside saw blade to form the inside saw blade assembly, which allows the inside saw blade and the flange sleeve to rotate along with the outer race of the bearing. A depth in axial direction of the mounting hole of the flange sleeve is equal to a width of the bearing, and the depth in axial direction of the mounting hole of the flange sleeve is a vertical distance from the axial locating surface of the flange sleeve to the flange surface, which makes the axial locating surface of the flange sleeve and the cutting face of the inside saw blade limit the position of the bearing in axial direction, and ensures that the inside saw blade does not move along axially in the cutting process.

Furthermore, a driving coupling interface is arranged in an end surface of the flange sleeve that is opposite to the flange surface. The driving coupling interface is driving coupling lug bosses, driving coupling grooves, or driving coupling holes. The outside saw blade and the supporting sleeve fixedly connected therewith are in positional connection with the inner race of the bearing, and the driving shaft of the outside saw blade is in key fit connection with the supporting sleeve. A pressure plate screw is arranged in a screw hole of an output end of the driving shaft of the outside saw blade by rotary method, which closely fixes the outside saw blade assembly to the driving shaft of the outside saw blade, and the outside saw blade rotates along with the driving of the driving shaft of the outside saw blade. The inside saw blade and the flange sleeve fixedly connected therewith are in positional connection with the outer race of the bearing, the driving coupling interface arranged in the end surface of the flange sleeve being opposite to the flange surface is correspondingly connected to a driving coupling interface arranged in a flange surface of an output end of the driving shaft of the inside saw blade, which obtains a driving coupling between the inside saw blade and the driving shaft of the inside saw blade, where the driving coupling is a nonconstraint-engagement driving connection in axis direction. When the driving shaft of the outside saw blade and the driving shaft of the inside saw blade rotate in opposite directions, the outside saw blade and the inside saw blade are driven to perform a rotary bevelment movement.

The merits of the present disclosure are as follows:

The outside saw blade and the inside saw blade are in positional connection with the inner race of the bearing and the outer race of the bearing, respectively. The outside saw blade and the inside saw blade form the rotary bevelment composite saw blade of the present disclosure, which allows the outside saw blade and the inside saw blade to rotate along with the inner race and the outer race of the bearing, respectively, thereby improving position precision and rotation precision of the outside saw blade and the inside saw blade. The thrust ring accurately controls the working clearance between the outside saw blade and the inside saw blade, and ensures the reliable rotary positions of the outside saw blade and the inside saw blade, and further ensure to form a reliable rotary bevelment movement, thereby avoiding interference, collision, and heat generated in the friction between the saw blades when the outside saw blade and the inside saw blade rotate in the opposite directions, and avoiding the pieces cut blocking between the outside saw blade and the inside saw blade to increase the working clearance between the outside saw blade and the inside saw blade, thereby damaging the saw blades. Thus, the saw blade can steadily rotate, has high cutting efficiency and long service life, and is steady and safe.

### BRIEF DESCRIPTION OF FIGURES

FIG. 1 is a structural diagram of a rotary bevelment composite saw blade of a first example of the present disclosure.
FIG. 2 is a structural diagram of a supporting sleeve of a first example of the present disclosure.
FIG. 3 is a structural diagram of a flange sleeve of a first example of the present disclosure.
FIG. 4 is a structural diagram of a rotary bevelment composite saw blade of a second example of the present disclosure.

Legends: 1. outside saw blade assembly; 11. outside saw blade; 12. supporting sleeve; 110. first mounting hole; 111. outside saw blade body; 112. welding saw teeth; 2. inside saw blade assembly; 21. inside saw blade; 22. flange sleeve; 210. second mounting hole; 211. inside saw blade body; 3. thrust ring; 4. fastening parts; 5. bearing; 51. inner race; 52. outer race; 511. step surface of the inner race; 521. step surface of the outer race; 6. driving coupling interface.

### DETAILED DESCRIPTION

The exemplary examples are described in detail in accordance with the figures to allow persons skilled in the art to easily understand the merit and characteristic of the present disclosure, and further clearly and definitely determine the protection scope of the present disclosure.

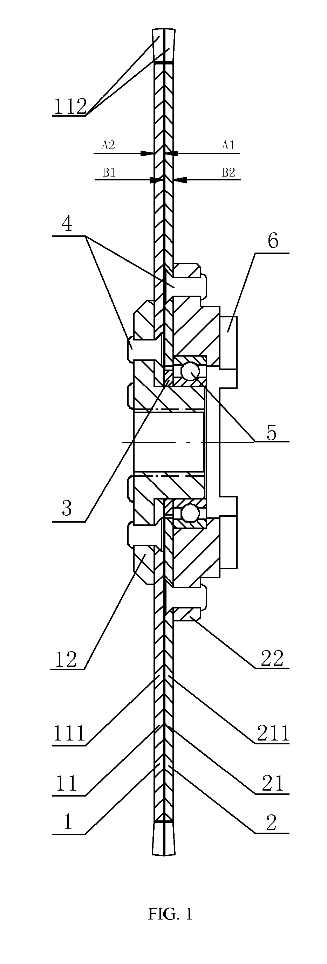

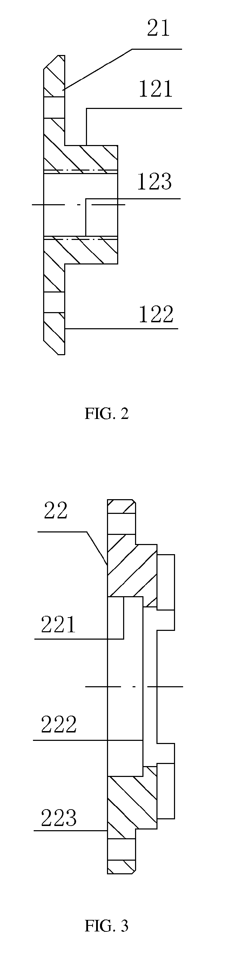

A first example is shown in FIG. 1 to FIG. 3. In a rotary bevelment composite saw blade of the present disclosure, an outside saw blade and an inside saw blade work in with a supporting sleeve and a flange sleeve, respectively, which obtains a reliable interconnection between the outside saw blade and an inner race of a bearing, and a reliable positioning joint between the inside saw blade and an outer race of the bearing, thus, an integrated rotary bevelment composite saw blade is formed. The outside saw blade freely rotates along with the inner race of the bearing, and the inside saw blade freely rotates along with the outer race of the bearing.

A specific structure of the rotary bevelment composite saw blade is as follows:

The rotary bevelment composite saw blade comprises an outside saw blade assembly 1, an inside saw blade assembly 2, and a thrust ring 3. The outside saw blade assembly 1 comprises the outside saw blade 11, the supporting sleeve 12, and fastening parts 4. The inside saw blade assembly 2 comprises the inside saw blade 21, the flange sleeve 22, the fastening parts 4, and a bearing 5. The outside saw blade 11 comprises an outside saw blade body 111 and welding saw teeth 112, and the inside saw blade 21 comprises an inside saw blade body 211 and the welding saw teeth 112. The welding saw teeth 112 of the outside saw blade 11 are evenly welded in a tooth holder of a periphery of the outside saw blade body 111 and the welding saw teeth 112 of the inside saw blade 21 are evenly welded in a tooth holder of a periphery of the inside saw blade body 211. A first side face of the outside saw blade body 111 is regarded as a working surface A1, and a second side face of the outside saw blade body 111 is regarded as a cutting face A2. A first side face of the inside saw blade body 211 is regarded as a working surface B1, and a second side face of the inside saw blade body 211 is regarded as a cutting face B2. The outside saw blade 11 and the inside saw blade 21 rotate round a coaxial center of rotation , and centers of the outside saw blade 11 and the inside saw blade 21 are configured with mounting holes. The working surface A1 of the outside saw blade body 111 and the working surface B1 of the inside saw blade body 211 are arranged face to face, and are parallel with each other, and a working clearance is preset between the working surface A1 of the outside saw blade body 111 and the working surface B2 of the inside saw blade body 211. The outside saw blade 11 and the inside saw blade 21 rotate in opposite directions. A cylindrical surface 121 and an axial locating surface 122 being perpendicular to the cylindrical surface 121 are arranged on the supporting sleeve 12 of the outside saw blade assembly 1. The mounting hole of the outside saw blade 11 and the cylindrical surface 121 of the supporting sleeve 12 are in concentric engagement, and the cutting face A2 of the outside saw blade 11 parallelly attaches to the axial locating surface 122 of the supporting sleeve 12, the outside saw blade body 111 is connected and fixed to the axial locating surface 122 of the supporting sleeve 12 through the fastening parts 4. The inner race of the bearing 5 is connected to the cylindrical surface 121 of the supporting sleeve 12 in concentric engagement, and positions the outside saw blade 11. A center of the flange sleeve 22 is configured with a mounting hole 221 and an axial locating surface 222, a flange surface 223 is a side surface of the flange sleeve that is in a same direction with the axial locating surface 222 of the flange sleeve 22, and the bearing 5 is fitted in the mounting hole 221 of the flange sleeve 22. The mounting hole of the inside saw blade 21 and the flange sleeve 22 are in concentric engagement, and the cutting face B2 of the inside saw blade 21 parallelly attaches to the flange surface 223, the inside saw blade body 211 is connected and fixed to the flange surface 223 of the flange sleeve 22 through the fastening parts 4. A first side surface of the outer race of the bearing 5 parallelly attaches to the axial locating surface 222 of the flange sleeve 22, a second side surface of the outer race of the bearing 5 parallelly attaches to the cutting face B2 of the inside saw blade 21, and the outer race of the bearing 5 positions the inside saw blade 21. The thrust ring 3 is arranged between the inner race of the bearing 5 and the outside saw blade 11, a first side surface of the thrust ring 3 parallelly attaches to the working surface A1 of the outside saw blade 11, and a second side surface of the thrust ring 3 parallelly attaches to a side surface of the inner race of the bearing being adjacent to the second side surface of the thrust ring 3. The outside saw blade 11 is positioned by the inner race of the bearing 5 and the inside saw blade 21 is positioned by the outer race of the bearing 5 to form the integrate rotary bevelment composite saw blade, and the outside saw blade 11 and the inside saw blade 21 rotate in the inner race of the bearing 5 and the outer race of the bearing 5, respectively.

The welding saw teeth 112 of the outside saw blade 11 are even with or lower than the working surface A1 of the outside saw blade 11, which avoids the welding saw teeth 112 of the outside saw blade 11 from protruding from the working surface A1 of the outside saw blade 11. The welding saw teeth 112 of the outside saw blade 11 protrude from the cutting face A2 of the outside saw blade 11 to form side cutting edges. The welding saw teeth 112 of the inside saw blade 21 are even with or lower than the working surface B1 of the inside saw blade 21, which avoids the welding saw teeth 112 of the inside saw blade 21 from protruding from the working surface B1 of the inside saw blade 21. The welding saw teeth 112 of the inside saw blade 21 protrude from the cutting face B2 of the inside saw blade 21 to form side cutting edges. Distance between the welding saw teeth and the working surface (A1 or B1) of the saw blade (11 or 21) is in the range of 0-0.2 mm, and height of the side cutting edges is in the range of 0-1mm. Thus, the interference and collision between the welding saw teeth of the outside saw blade and the welding saw teeth of the inside saw blade are ensured to not be generated, and the side cutting edges are formed at the cutting faces of the outside and inside saw blade.

The first side surface of the thrust ring 3 closely attaches to the outside saw blade 11, and the second side surface of the thrust ring 3 closely attaches to the inner race of the bearing 5. A working clearance between the outside saw blade 11 and the inside saw blade 21 is determined by a width of the thrust ring 3 and a thickness of the inside saw blade body 211, and is set between 0 mm and 0.5 mm. Thus, reliable rotary positions of the outside saw blade 11 and the inside saw blade 21 are ensured, and the working clearance between the outside saw blade 11 and the inside saw blade 21 is accurately ensured.

Diameter of the mounting hole of the inside saw blade 21 is less than an external diameter of the bearing 5. Thus, after the inside saw blade 21 and the flange sleeve 22 are assembled, a positioning step is formed, which allows the inside saw blade body 211 to limit a position of the outer race of the bearing in the axial direction, ensuring an axial movement of the inside saw blade 21 to not be generated in the cutting process, and further stabilizes the working clearance between the outside saw blade 11 and the inside saw blade 21. At least three countersunk holes are arranged in a side of the working surface A1 of the outside saw blade body 111 of the outside saw blade 11 around the mounting hole, and in circular distribution around axis of rotation. At least three countersunk holes are arranged in a side of the working surface B1 of the inside saw blade body 211 of the inside saw blade 21arround the mounting hole, and in circular distribution around axis of rotation. The countersunk holes are used to fix and connect the outside saw blade 11 to the supporting sleeve 12, and the inside saw blade 21 to the flange sleeve 22.

At least three connecting holes are arranged in the axial locating surface 122 of the supporting sleeve 12, and in circular distribution around axis of rotation. Position and distribution of the connecting holes are consistent with position and distribution of the countersunk holes of the outside saw blade body 111, and a driving keyway is arranged in an inner hole of the supporting sleeve 12. Thus, the mounting hole of the outside saw blade 11 and the cylindrical surface 121 of the supporting sleeve 12 are in concentric engagement, the cutting face A2 of the outside saw blade 11 parallelly attaches to the axial locating surface 122 of the supporting sleeve 12, the fastening parts pass through the countersunk hole of the outside saw blade 11 to connect and fix the outside saw blade body 111 to the axial locating surface 122 of the supporting sleeve 12. The cylindrical surface 121 of the supporting sleeve 12 is connected with the inner race of the bearing 5 in concentric engagement, and the inner race of the bearing 5 positions the outside saw blade 11, which forms the outside saw blade assembly 1, and allows the outside saw blade 11 and the supporting sleeve 12 to rotate along with the inner race of the bearing 5. The driving keyway is arranged in the inner hole of the supporting sleeve 12, which allows the supporting sleeve 12 and a driving shaft of the outside saw blade to form a driving coupling connection between, and further drives the supporting sleeve 12 to rotate. The driving keyway may be a spline, a parallel key, a woodruff key, or a flat-square hole having at least one plane.

At least three connecting holes are arranged in the flange surface 223 of the flange sleeve 22, and in circular distribution around axis of rotation. Position and distribution of the connecting holes are consistent with position and distribution of the countersunk holes of the inside saw blade body 211. Thus, the fastening parts pass through the countersunk hole of the inside saw blade 21 to connect and fix the inside saw blade 21 to the flange sleeve 22. The bearing 5 is fitted in the mounting hole 221 of the flange sleeve 22 and connected with the flange sleeve 22 in concentric engagement. The outer race of the bearing positions the inside saw blade 21, which forms the inside saw blade assembly 2, and allows the inside saw blade 21 and the flange sleeve 22 to rotate along with the outer race of the bearing. A depth in axial direction of the mounting hole 221 of the flange sleeve 22 is substantially equal to a width of the bearing 5, where the depth in axial direction of the mounting hole 221 of the flange sleeve 22 is a vertical distance from the axial locating surface 222 of the flange sleeve 22 to the flange surface 223. Thus, the axial locating surface 222 of the flange sleeve 22 and the cutting face of the inside saw blade 21 limit a position of the bearing in axial direction, which ensures an axial movement of the inside saw blade 21 to not be generated in the cutting process.

The fastening parts 4 may choose a countersunk rivet or a countersunk screw. In the first example of the present disclosure, the fastening parts 4 are the countersunk rivets, which are used to connect and fix the outside saw blade 11 to the supporting sleeve 12, and the inside saw blade 21 to the flange sleeve 22.

A driving coupling interface 6 is arranged in an end surface of the flange sleeve 22 that is opposite to the flange surface 223. The driving coupling interface 6 may be driving coupling lug bosses, driving coupling grooves, or driving coupling holes. The outside saw blade 11 and the supporting sleeve 12 fixedly connected therewith are in positional connection with the inner race of the bearing, and the driving shaft of the outside saw blade is in key fit connection with the supporting sleeve 12. A pressure plate screw is arranged in a screw hole of an output end of the driving shaft of the outside saw blade by rotary method, which closely fixes the outside saw blade assembly 1 to the driving shaft of the outside saw blade, and the outside saw blade 11 rotates along with the driving of the driving shaft of the outside saw blade. The inside saw blade 21 and the flange sleeve 22 fixedly connected therewith are in positional connection with the outer race of the bearing, the driving coupling interface 6 arranged in the end surface of the flange sleeve 22 being opposite to the flange surface 223 is correspondingly connected to a driving coupling interface arranged in a flange surface of an output end of the driving shaft of the inside saw blade, which obtains a driving coupling between the inside saw blade 21 and the driving shaft of the inside saw blade, where the driving coupling is a nonconstraint-engagement driving connection in axis direction. When the driving shaft of the outside saw blade and the driving shaft of the inside saw blade rotate in opposite directions, the outside saw blade 11 and the inside saw blade 21 are driven to perform a rotary bevelment movement.

The first example employs a normal bearing to obtain the rotary bevelment composite saw blade of the present disclosure, which is conveniently and easily obtained.

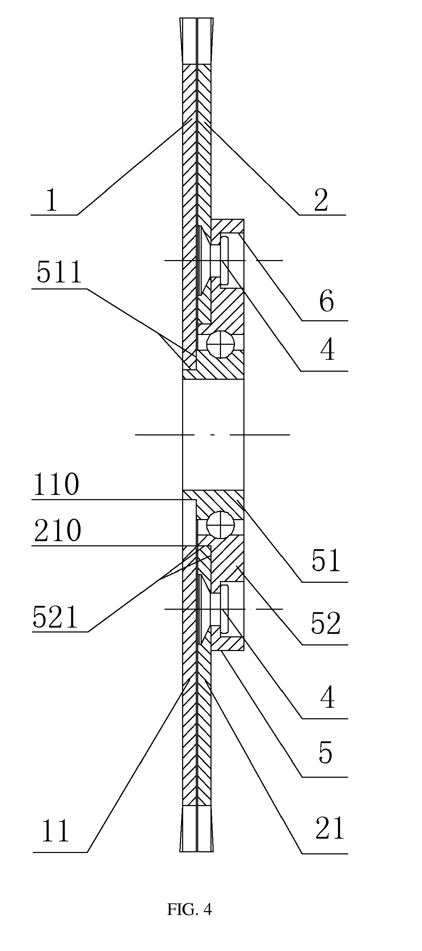

A second example of the present disclosure is shown in FIG. 4, a difference between the rotary bevelment composite saw blades of the second example and the first example is that the rotary bevelment composite saw blade of the second example is configured with a special bearing. In the second example of the present disclosure, the inner race of the bearing and the supporting sleeve are formed in a signal body, the outer race of the bearing and the flange sleeve are formed in the signal body, which is no need to arrange the thrust ring in the second example. The gap between the outside and inside saw blades is controlled by a vertical distance between positional step surfaces arranged on the inner race and the outer race of the bearing.

The special structure of the rotary bevelment composite saw blade is as follows:

The rotary bevelment composite saw blade comprises the outside saw blade 11, the inside saw blade 21, the bearing 5, and the fastening parts 4. The outside saw blade 11 and the inside saw blade 21 rotate round the coaxial center of rotation, are arranged face to face, and are parallel with each other. The center of the outside saw blade 11 is configured with a first mounting hole 110, and the center of the inside saw blade 21 is configured with a second mounting hole 210. The outside saw blade 11 and the inside saw blade 21 rotate in the opposite directions. The outside saw blade 11 and the inner race 51 of the bearing are positioned through the first mounting hole 110 of the outside saw blade 11 and the step surface 511 arranged on the inner race 51 of the bearing, and the outside saw blade 11 is fixedly connected to the inner race 51 of the bearing using an interference fit, a welding, a riveting, or a screw. The inside saw blade 21 and the outer race 52 of the bearing are positioned through the second mounting hole 210 of the inside saw blade 21 and the step surface 521 arranged on the outer race 52 of the bearing, and the inside saw blade 21 is fixedly connected to the outer race 52 of the bearing through the fastening parts 4. The fastening parts 4 may be the countersunk rivet or the countersunk screw. In the second example of the present disclosure, the countersunk rivet is used to fix the inside saw blade 21 to the outer race 52 of the bearing. At least two holes are fitted in a flange surface of the outer race 52 of the bearing and evenly round the axis of the bearing, where an axial cross-section of the hole is step-shaped, namely the hole is a step-shaped hole. A first end of the step-shaped hole is close to the inside saw blade 21, and a second end of the step-shaped hole is opposite to the inside saw blade 21, where diameter of the first end of the step-shaped hole is less than diameter of the second end of the step-shaped hole. A rivet countersink is arranged in the inside saw blade 21, where diameter of the rivet countersink is corresponding to a size of the rivet, quantity and distribution of the rivet countersink are consistent with quantity and distribution of the step-shaped hole. The countersunk rivet passes through the rivet countersink of the inside saw blade 21 and the first end of the step-shaped hole to rivet the inside saw blade 21 and the outer race 52 of the bearing, and a head of the countersunk rivet stays in the second end of the step-shaped hole. Diameter of the second end of the step-shaped hole satisfies the head of the countersunk rivet, a length of a remaining space of the second end of the step-shaped hole is sufficient for being used as the driving coupling interface 6.

In order to ensure a reliable rotary position of the outside saw blade 11 and the inside saw blade 12, and the working clearance between the outside saw blade 11 and the inside saw blade 12. The working clearance is determined by distance between an axial locating surface of the step surface 511 arranged on the inner race 51 of the bearing and an axial locating surface of the step surface 521 arranged on the outer race 52 of the bearing, where the distance is between 0 mm and 0.5 mm, a corresponding working clearance can be adjusted according to the diameter of the saw blade.

According to the above-mentioned assembly, the reliable position of the outside saw blade 11 and the inside saw blade 21 is obtained through the bearing 5, and further the integrate rotary bevelment composite saw blade is formed, where the outside saw blade 11 and the inside saw blade 21 rotate in opposite directions. The outside saw blade 11 freely rotates along with the inner race 51 of the bearing, and the inside saw blade 21 freely rotates along with the outer race 52 of the bearing.

In order to reliably transmit output torque of the driving shaft of the outside saw blade to the outside saw blade 11, and make the outside saw blade 11 rotate along with the inner race 51 of the bearing, the driving keyway is arranged in an inner hole of the inner race of the bearing. The outside saw blade 11 and the inner race 51 of the bearing fixedly connected therewith are in key fit connection with the driving shaft of the outside saw blade. The pressure plate screw is arranged in the screw hole of the output end of the driving shaft of the outside saw blade by rotary method, which closely fixes the outside saw blade 11 to the driving shaft of the outside saw blade, and the outside saw blade 11 rotates along with the driving of the driving shaft of the outside saw blade.

In order to reliably transmit an output torque of the driving shaft of the inside saw blade to the inside saw blade 21, and make the inside saw blade 21 rotate along with the outer race 52 of the bearing, the driving coupling interface 6 is arranged in a side surface of the inside saw blade 21 opposite to the outside saw blade 11, or the flange surface of the outer race 52 of the bearing connected with the inside saw blade in the same direction. A driving coupling interface corresponding to the driving coupling interface 6 is arranged in a flange surface of the output end of the driving shaft of the inside saw blade. The mating driving coupling interface is not limited in position in axial and radial direction, thereby avoiding over-constraint and making the mate driving coupling interface only capable of transmitting the torque. The driving coupling interface 6 may be driving coupling lug bosses, driving coupling grooves, or driving coupling holes.

The exemplary structure of the driving coupling interface 6 in the present disclosure is as follows:

At least two step-shaped through hole are arranged in the flange sleeve of the outer race 52 of the bearing. Number and distribution of the step-shaped through hole are consistent with number and distribution of a connecting hole arranged in the inside saw blade 21. The diameter of the first end of the step-shaped hole is equal to diameter of the connecting hole arranged in the inside saw blade 21, the diameter of the second end of the step-shaped hole satisfies the head of the countersunk rivet and bears a cutting torque of the inside saw blade. The exemplary fastening parts 4 of the second example are the countersunk rivets, which passes through the connecting hole arranged in the inside saw blade 21 and the first end of the step-shaped hole arranged in the flange sleeve of the outer race 52 of the bearing, and rivets the inside saw blade 21 and the outer race 52 of the bearing. The second end of the step-shaped hole after being riveted remains sufficient depth for being used as the driving coupling interface 6. A driving pin is arranged in the flange sleeve of the output end of the driving shaft of the inside saw blade, where distribution of the driving pin is corresponding to the distribution of the step-shaped hole. The driving pin is connected to the driving coupling interface 6 by a loose fit or the interference fit.

In the second example of the present disclosure, the driving pin arranged in the flange sleeve of the output end of the driving shaft of the inside saw blade slides into the driving coupling interference 6 arranged in the second end of the step-shaped hole after being riveted, and the outside saw blade 11 and the inner race 51 of the bearing fixedly connected therewith are in key fit connection with the driving shaft of the outside saw blade. The pressure plate screw is arranged in the screw hole of the output end of the driving shaft of the outside saw blade by rotary method, which closely fixes the outside saw blade 11 to the driving shaft of the outside saw blade, and the outside saw blade 11 rotates along with the driving of the driving shaft of the outside saw blade. The driving shaft of the inside saw blade being concentric with the driving shaft of the outside saw blade is in nonconstraint-engagement driving connection with the driving coupling interface in axis direction. When the driving shaft of the outside saw blade and the driving shaft of the inside saw blade rotate in opposite directions, the outside saw blade 11 and the inside saw blade 21 are driven to perform an opposite rotary bevelment movement. And, the outside saw blade 11 and the inside saw blade 21 can freely rotate round the bearing 5 because of a high precision position of the bearing.

The second example employs the special bearing to obtain the rotary bevelment composite saw blade of the present disclosure, the structure is simple, the position precision is high, and the rotary bevelment composite saw blade of the second example can be manufactured in mass.

The above exemplary example is only used to describe the technical conception and characteristic, and make persons knowing the art understand the content of the present disclosure and do it. However, this present disclosure is not limited to the exemplary examples. On the premise of keeping the conception and the scope of the present disclosure, all modifications, equivalent replacements and improvements, etc. should be considered to belong to the protection scope of the present disclosure.

## Claims

1. A design solution of a rotary bevelment composite saw blade, comprising:
an outside saw blade; and
an inside saw blade;
wherein the outside saw blade and the inside saw blade rotate round a coaxial center of rotation and are arranged face to face; centers of the outside saw blade and the inside saw blade are configured with a mounting hole; the outside saw blade and the inside saw blade rotate in opposite directions;
a bearing and a thrust ring arranged between the outside saw blade and the inside saw blade, and the outside saw blade and the inside saw blade are integrally positioned through the bearing; an inner race of the bearing is in positional connection with the outside saw blade, and an outer race of the bearing is in positional connection with the inside saw blade; the thrust ring controls a working clearance between the outside saw blade and the inside saw blade, which achieves a rotary connection of the outside saw blade and the inside saw blade;
the outside saw blade and a supporting sleeve are in concentric engagement, and the outside saw blade is connected and fixed to the supporting sleeve through fastening parts; the inner race of the bearing is connected to the supporting sleeve in concentric engagement, and positions the outside saw blade; the inner saw blade and a flange sleeve are in concentric engagement, and the inner saw blade is connected and fixed to the flange sleeve by the fastening parts; the outer race of the bearing is connected to the flange sleeve in concentric engagement, and positions the inside saw blade; the thrust ring is arranged between the outside saw blade and the inner race of the bearing, and the working clearance between the outside saw blade and the inside saw blade is determined by the thrust ring;
the outside saw blade and the inside saw blade are in position and fit connection with the bearing to form an integrate rotary bevelment composite saw blade, and the outside saw blade and the inside saw blade freely rotate along with the inner race and the outer race of the bearing, respectively; a driving keyway is arranged in a center of the supporting sleeve, which allows the supporting sleeve to be in driving coupling connection with a driving shaft of the outside saw blade; a driving coupling interface is arranged in an end surface of the flange sleeve, which allows the flange sleeve to be in driving coupling connection with a driving shaft of the inside saw blade; the driving shaft of the inside saw blade and the driving shaft of the outside saw blade are concentrically arranged, and rotate in opposite directions.

2. A rotary bevelment composite saw blade to implement the design solution of Claim 1, comprising:
an outside saw blade (11), and;
an inside saw blade (21);
wherein the outside saw blade (11) comprises an outside saw blade body (111) and welding saw teeth (112), and the inside saw blade (21) comprises an outside saw blade body (211) and welding saw teeth (112); the welding saw teeth (112) of the outside saw blade (11) and the welding saw teeth (112) of the inside saw blade (21) are evenly welded in a tooth holder of a periphery of the outside saw blade body (111) and a tooth holder of a periphery of the inside saw blade body (211), respectively; a first side face of the outside saw blade body (111) is regarded as a working surface (A1), and a second side face of the outside saw blade body (111) is regarded as a cutting face (A2); a first side face of the inside saw blade body (211) is regarded as a working surface (B1), and a second side face of the inside saw blade body (211) is regarded as a cutting face (B2); the outside saw blade (11) and the inside saw blade (21) rotate round a coaxial center of rotation, and centers of the outside saw blade (11) and the inside saw blade (21) are configured with mounting holes; the working surface (A1) of the outside saw blade body (111) and the working surface (B1) of the inside saw blade body (211) are arranged face to face, and are parallel with each other; a working clearance is preset between the working surface (A1) of the outside saw blade body (111) and the working surface (B1) of the inside saw blade body (211); the outside saw blade (11) and the inside saw blade (21) rotate in the opposite directions;
the rotary bevelment composite saw blade comprises an outside saw blade assembly (1), an inside saw blade assembly (2), and a thrust ring (3); the outside saw blade assembly (1) comprises the outside saw blade (11), a supporting sleeve (4), and fastening parts (4); the inside saw blade assembly (2) comprises the inside saw blade (21), a flange sleeve (22), the fastening parts (4), and a bearing (5); a cylindrical surface (121) and an axial locating surface (122) being perpendicular to the cylindrical surface (121) are arranged on the supporting sleeve (12); the mounting hole of the outside saw blade (11) and the cylindrical surface (121) of the supporting sleeve (12) are in concentric engagement, and the cutting face (A2) of the outside saw blade (11) parallelly attaches to the axial locating surface (122) of the supporting sleeve (12), the outside saw blade body (111) is connected and fixed to the axial locating surface (122) of the supporting sleeve (12) through the fastening parts (4); the inner race of the bearing is connected to the cylindrical surface (121) of the supporting sleeve (12) in concentric engagement, and positions the outside saw blade (11); a center of the flange sleeve (22) is configured with a mounting hole (221) and an axial locating surface (222), a flange surface (223) is a side surface of the flange sleeve that is in a same direction with the axial locating surface (222) of the flange sleeve (22), and the bearing 5 is fitted in the mounting hole (221) of the flange sleeve (22); the mounting hole of the inside saw blade (21) is concentric with the flange sleeve (22), and the cutting face (B2) of the inside saw blade (21) parallelly attaches to the flange surface (223), the inside saw blade body (211) is connected and fixed to the flange surface (223) through the fastening parts (4); a first side surface of the outer race of the bearing parallelly attaches to the axial locating surface (222) of the flange sleeve (22), a second side surface of the outer race of the bearing parallelly attaches to the cutting face (B2) of the inside saw blade (21), and the outer race of the bearing positions the inside saw blade (21); the thrust ring (3) is arranged between the inner race of the bearing and the outside saw blade (11), a first side surface of the thrust ring (3) parallelly attaches to the working surface (A1) of the outside saw blade (11), and a second side surface of the thrust ring (3) parallelly attaches to a side surface of the inner race of the bearing being adjacent to the second side surface of the thrust ring (3); the outside saw blade (11) is positioned by the inner race of the bearing (5) and the inside saw blade (21) is positioned by the outer race of the bearing (5) to form the integrate rotary bevelment composite saw blade, and the outside saw blade (11) and the inside saw blade (21) rotate along with the inner race and the outer race of the bearing, respectively.

3. The rotary bevelment composite saw blade of Claim 2, wherein the welding saw teeth (112) of the outside saw blade (11) are even with or lower than the working surface (A1) of the outside saw blade (11), which avoids the welding saw teeth (112) of the outside saw blade (11) from protruding from the working surface (A1) of the outside saw blade (11); the welding saw teeth (112) of the outside saw blade (11) protrude from the cutting face (A2) of the outside saw blade (11) to form side cutting edges; the welding saw teeth (112) of the inside saw blade (21) is even with or lower than the working surface (B1) of the inside saw blade (21), which avoids the welding saw teeth (112) of the inside saw blade (21) from protruding from the working surface (B1) of the inside saw blade (21); the welding saw teeth (112) of the inside saw blade (21) protrude from the cutting face (B2) of the inside saw blade (21) to form the side cutting edges.

4. The rotary bevelment composite saw blade of Claim 3, wherein distance between the welding saw teeth and the working surface of the saw blade is in the range of 0-0.2 mm, and heights of the side cutting edges of the outside saw blade (11) and the inside saw blade (21) are in the range of 0-1mm.

5. The rotary bevelment composite saw blade of Claim 2, wherein the working clearance between the outside saw blade (11) and the inside saw blade (12) is determined by a width of the thrust ring (3) and a thickness of the inside saw blade body (211), and is set between 0 mm and 0.5 mm.

6. The rotary bevelment composite saw blade of Claim 2, wherein diameter of the mounting hole of the inside saw blade (21) is less than an external diameter of the bearing (5); at least three countersunk holes are arranged in a side of the working surface (A1) of the outside saw blade body (111) of the outside saw blade around the mounting hole, and in circular distribution around axis of rotation; at least three countersunk holes are arranged in a side of the working surface (B1) of the inside saw blade body (211) of the inside saw blade around the mounting hole, and in circular distribution around axis of rotation.

7. The rotary bevelment composite saw blade of Claim 2, wherein at least three connecting holes are arranged in the axial locating surface (122) of the supporting sleeve (12), and in circular distribution around axis of rotation; position and distribution of the connecting holes are consistent with position and distribution of the countersunk holes of the outside saw blade body (111), and a driving keyway is arranged in an inner hole of the supporting sleeve (12).

8. The rotary bevelment composite saw blade of Claim 2, wherein at least three connecting holes are arranged in the flange surface (223) of the flange sleeve (22), and in circular distribution around axis of rotation; position and distribution of the connecting hole are consistent with position and distribution of the countersunk hole of the inside saw blade body (211); a depth in axial direction of the mounting hole (221) of the flange sleeve (22) is equal to a width of the bearing (5), and the depth in axial direction of the mounting hole (221) of the flange sleeve (22) is a vertical distance from the axial locating surface (222) of the flange sleeve (22) to the flange surface (223).

9. The rotary bevelment composite saw blade of Claim 8, wherein a driving coupling interface (6) is arranged in an end surface of the flange sleeve (22) that is opposite to the flange surface (223); the driving coupling interface (6) is driving coupling lug bosses, driving coupling grooves, or a driving coupling holes.

## Amended claims

### Amended claims under Art. 19.1 PCT

**1.** A method for manufacturing a rotary bevelment composite saw blade, comprising:
connecting and positioning an outside saw blade (11) and an inside saw blade (21) with an inner race of a bearing (5) and an outer race of a bearing (5), respectively, and forming a step of an integrate rotary bevelment composite saw blade;
wherein the step comprises:
connecting a supporting sleeve (12) and a flange sleeve (22) with the inner race of the bearing (5) and the outer race of the bearing (5), respectively, and fixing the outside saw blade (11) and the inside saw blade (21) to the supporting sleeve (12) and the flange sleeve (22), respectively; arranging a thrust ring (3) between the outside saw blade (11) and the inner race of the bearing (5), and adjusting a working clearance between the outside saw blade (11) and the inside saw blade (21) through the thrust ring (3).

**2.** A rotary bevelment composite saw blade, comprising:
an outside saw blade assembly (1) comprising an outside saw blade (11), a supporting sleeve (12), and fastening parts (4);
an inside saw blade assembly (2) comprising an inside saw blade (21), a flange sleeve (22), the fastening parts (4), and a bearing (5); and
a thrust ring (3);
wherein a cylindrical surface (121) and an axial locating surface (122) being perpendicular to the cylindrical surface (121) are arranged on the supporting sleeve (12); a mounting hole of the outside saw blade (11) and the cylindrical surface (121) of the supporting sleeve (12) are in concentric engagement, and a cutting face (A2) of the outside saw blade (11) parallelly attaches to the axial locating surface (122) of the supporting sleeve (12), the outside saw blade body (111) is connected and fixed to the axial locating surface (122) of the supporting sleeve (12) through the fastening parts (4); an inner race of the bearing (5) is connected to the cylindrical surface (121) of the supporting sleeve (12) in concentric engagement, and positions the outside saw blade (11);
the flange sleeve (22) is configured with a mounting hole (221) and an axial locating surface (222), and the bearing (5) is fitted in the mounting hole (221) of the flange sleeve (22); a mounting hole of the inside saw blade (21) is concentric with the flange sleeve (22), and a cutting face (B2) of the inside saw blade (21) parallelly attaches to a flange surface (223), the inside saw blade body (211) is connected and fixed to the flange surface (223) through the fastening parts (4); a first side surface of an outer race of the bearing (5) parallelly attaches to the axial locating surface (222) of the flange sleeve (22), a second side surface of the outer race of the bearing (5) parallelly attaches to the cutting face (B2) of the inside saw blade (21), and the outer race of the bearing (5) positions the inside saw blade (21);
the thrust ring (3) is arranged between the inner race of the bearing (5) and the outside saw blade (11), a first side surface of the thrust ring (3) parallelly attaches to the working surface (A1) of the outside saw blade (11), and a second side surface of the thrust ring (3) parallelly attaches to a side surface of the inner race of the bearing (5) being adjacent to the second side surface of the thrust ring (3); the outside saw blade (11) is positioned by the inner race of the bearing (5) and the inside saw blade (21) is positioned by the outer race of the bearing (5) to form an integrate rotary bevelment composite saw blade, and the outside saw blade (11) and the inside saw blade (21) freely rotate along with the inner race of the bearing (5) and the outer race of the bearing (5), respectively.

**3.** The rotary bevelment composite saw blade of Claim 2, wherein saw teeth (112) of the outside saw blade (11) are even with or lower than the working surface (A1) of the outside saw blade (11), and the saw teeth (112) of the outside saw blade (11) protrude from the cutting face (A2) of the outside saw blade (11) to form side cutting edges; saw teeth (112) of the inside saw blade (21) are even with or lower than the working surface (B1) of the inside saw blade (21), and the saw teeth (112) of the inside saw blade (21) protrude from the cutting face (B2) of the inside saw blade (21) to form side cutting edges.

**4.** The rotary bevelment composite saw blade of Claim 2, wherein distance between the saw teeth and the working surface of the saw blade is in the range of 0-0.2 mm, and heights of the side cutting edges of the outside saw blade (11) and the inside saw blade (21) are in the range of 0-1mm.

**5.** The rotary bevelment composite saw blade of Claim 2, wherein the working clearance between the outside saw blade (11) and the inside saw blade (12) is determined by a width of the thrust ring (3) and a thickness of the inside saw blade body (211), and the working clearance is set between 0 mm and 0.5 mm.

**6.** The rotary bevelment composite saw blade of Claim 2, wherein at least three countersunk holes are arranged in a side of working surface (A1) of the outside saw blade (11) around the mounting hole, and in circular distribution around axis of rotation; at least three connecting holes are arranged in the axial locating surface (122) of the supporting sleeve (12), and in circular distribution around axis of rotation; and position and distribution of the connecting holes are consistent with position and distribution of the countersunk holes in the outside saw blade (11); the outside saw blade (11) is connected to the supporting sleeve (12) through the connecting holes and the countersunk holes;
at least three countersunk holes are arranged in a side of working surface (B1) of the inside saw blade(21) around the mounting hole, and in circular distribution around axis of rotation; at least three connecting holes are arranged in the flange surface (223) of the flange sleeve (22), and in circular distribution around axis of rotation; and position and distribution of the connecting holes are consistent with position and distribution of the countersunk holes in the inside saw blade (21); the inside saw blade (21) is connected to the flange sleeve (22) through the connecting holes and the countersunk holes;
a depth in axial direction of the mounting hole (221) of the flange sleeve (22) is equal to a width of the bearing (5).

**7.** A rotary bevelment composite saw blade, comprising:
an outside saw blade (11);
an inside saw blade (21); and
a bearing (5);
wherein the outside saw blade (11) is in positional connection with an inner race of the bearing (5), and the inside saw blade (21) is in positional connection with an outer race of the bearing (5); the outside saw blade (11) and the inside saw blade (21) rotate along with the inner race of the bearing (5) and the outer race of the bearing (5), respectively.

**8.** The rotary bevelment composite saw blade of Claim 7, wherein the outside saw blade (11) is configured with a supporting sleeve (12), and the inside saw blade (21) is configured with a flange sleeve (22); the outside saw blade (11) is fitted in positional connection with the inner race of the bearing (5) through the supporting sleeve (12), and the inside saw blade (21) is fitted in positional connection with the outer race of the bearing (5) through the flange sleeve (22); a thrust ring (3) is arranged between the inner race of the bearing (5) and the outside saw blade (11), and the thrust ring (3) controls the working clearance between the outside saw blade (11) and the inside saw blade (21).

**9.** The rotary bevelment composite saw blade of Claim 8, wherein saw teeth (112) of the outside saw blade (11) are even with or lower than a working surface (A1) of the outside saw blade (11), and saw teeth (112) of the inside saw blade (21) are even with or lower than a working surface (B1) of the inside saw blade (21).

**10.** The rotary bevelment composite saw blade of Claim 9, wherein the saw teeth (112) of the outside saw blade (11) protrude from a cutting face (A2) of the outside saw blade (11) to form side cutting edges, and the saw teeth (112) of the inside saw blade (21) protrude from a cutting face (B2) of the inside saw blade (21) to form the side cutting edges.

**11.** The rotary bevelment composite saw blade of Claim 10, wherein distance between the saw teeth and the working surface of the saw blade is in the range of 0-0.2 mm, and heights of the side cutting edges of the outside saw blade (11) and the inside saw blade (21) are in the range of 0-1mm.

**12.** The rotary bevelment composite saw blade of Claim 8, wherein the working clearance between the outside saw blade (11) and the inside saw blade (12) is determined by a width of the thrust ring (3) and a thickness of the inside saw blade body (211), and is set between 0 mm and 0.5 mm.

**13.** The rotary bevelment composite saw blade of Claim 8, wherein diameter of a mounting hole of the inside saw blade (21) is less than an external diameter of the bearing (5); at least three countersunk holes are arranged in a side of working surface (A1) of the outside saw blade(11) around the mounting hole, and in circular distribution around axis of rotation;; at least three connecting holes are arranged in an axial locating surface (122) of the supporting sleeve (12), and in circular distribution around axis of rotation; and position and distribution of the connecting holes are consistent with position and distribution of the countersunk holes in the outside saw blade body (111);; the outside saw blade (11) is connected to the supporting sleeve (12) through the connecting holes and the countersunk holes.

**14.** The rotary bevelment composite saw blade of Claim 8, at least three countersunk holes are arranged in the side of working surface (B1) of the inside saw blade (21) around the mounting hole, and in circular distribution around axis of rotation; at least three connecting holes are arranged in the flange surface (223) of the flange sleeve (22), and in circular distribution around axis of rotation; and position and distribution of the connecting holes are consistent with position and distribution of the countersunk holes in the inside saw blade (21); the inside saw blade (21) is connected to the flange sleeve (22) through the connecting holes and the countersunk holes.

**15.** The rotary bevelment composite saw blade of Claim 8, wherein a driving keyway is arranged in an inner hole of the supporting sleeve (12), and is in driving coupling connection with a driving shaft of the outside saw blade (11); a driving coupling interface (6) is arranged in an end surface of the flange sleeve (22) that is opposite to a flange surface (223) of the flange sleeve (22); the driving coupling interface (6) is driving coupling lug bosses, driving coupling grooves, or driving coupling holes.
